Europäisches Patentamt

European Patent Office

Office européen des brevets

(19)

(11) Veröffentlichungsnummer: **0 250 807**
**B1**

(12)                  **EUROPÄISCHE PATENTSCHRIFT**

(45) Veröffentlichungstag der Patentschrift:
18.07.90

(51) Int. Cl.⁵: **B60J 5/10**

(21) Anmeldenummer: 87106957.1

(22) Anmeldetag: 13.05.87

(54) **Mehrzweckpersonenkraftwagen.**

(30) Priorität: 13.06.86  DE 3619943

(43) Veröffentlichungstag der Anmeldung:
07.01.88 Patentblatt 88/1

(45) Bekanntmachung des Hinweises auf die Patenterteilung:
18.07.90 Patentblatt 90/29

(84) Benannte Vertragsstaaten:
DE ES FR GB IT SE

(56) Entgegenhaltungen:
DE-A- 3 420 349
DE-B- 2 555 195
US-A- 2 200 511

(73) Patentinhaber: Bayerische Motoren Werke
Aktiengesellschaft, Patentabteilung
AJ-30 Postfach 40 02 40 Petuelring 130,
D-8000 München 40(DE)

(72) Erfinder: Steinberg, Klaus, Birkenstrasse 17,
D-8054 Mauern(DE)
Erfinder: Wurtz, Richard, Oberanger 17,
D-8061 Grossinzemoos(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf ein Schiebedach für einen Mehrzweckpersonenkraftwagen nach dem Oberbegriff des Hauptanspruchs.

Ein Fahrzeug mit einem derartigen Schiebedach zeigt die DE-A 3 420 349. Diese Art von Fahrzeugen zeichnen sich dadurch aus, daß sie am hinteren oberen Ende keinen Karosseriequerträger aufweisen. Dadurch erhält man einen großen Stauraum bei geöffnetem Schiebedach und geöffneter Heckscheibe. Jedoch erfordert die Abdichtung an den kritischen Stellen zwischen Schiebedach und Dachrahmen einerseits und Schiebedach und Heckscheibe andererseits besondere Aufmerksamkeit. Auch besteht bei solchen Fahrzeugen die Gefahr, daß beim Öffnen der Hecktür das Regenwasser über die Heckscheibe in den Kofferraum hineinläuft.

Aufgabe der Erfindung ist es, ein Schiebedach vorzusehen, mit dem der Hecktür-Schiebedach-Bereich so gestaltet werden kann, daß bei geschlossenem Schiebedach und Heckscheibe weder im geschlossenen noch im geöffneten Zustand der Hecktür Wasser in das Wageninnere eindringen kann.

Die Aufgabe wird erfindungsgemäß mit den kennzeichnenden Merkmalen des Hauptanspruchs gelöst.

Nach der Erfindung weist also das Schiebedach eine umlaufende Dichtungsleiste mit einer querverlaufenden Wasserführung auf. Die umlaufende Dichtungsleiste übernimmt bei geschlossenem Fahrzeug, das heißt bei geschlossener Hecktür und Schiebedach sowie hochgefahrener Heckscheibe, die Abdichtung zwischen Fahrzeugdach und Schiebedach einerseits und andererseits zwischen Schiebedach und Heckscheibe. Im Zustand der geöffneten Hecktür sorgt die Wasserführung im Schiebedach dafür, daß kein Wasser über die Heckscheibe in das Wageninnere fließen kann.

Die Wasserführung auf dem Schiebedach läßt sich in einfacher Weise durch eine Rille darstellen. Es hat sich aber auch als zweckmäßig erwiesen, hierfür eine höckerartige Erhebung in der Schiebedachoberfläche vorzusehen. Am Fuß dieser Erhebung fließt dann das Wasser ab. Dabei läßt sich die höckerartige Erhebung zugleich auch als Spoiler ausführen. Desweiteren kann die höckerartige Erhebung direkt aus dem Blech des Schiebedachs herausgeformt sein, sie kann aber ebensogut auch aufgesetzt oder durch entsprechende Formgebung an der Dichtungsleiste vorgesehen sein.

Die umlaufende Dichtungsleiste läßt sich einfach herstellen und weist keine Trennfuge auf, durch die wiederum Feuchtigkeit eindringen könnte. Weiter sind an der Dichtungsleiste zwei Dichtungsflächen vorgesehen, eine erste obere Dichtungsfläche und eine zweite seitliche Dichtungsfläche. Die obere Dichtungsfläche dichtet das Schiebedach gegen das Karosseriedach ab. Während die seitliche Dichtungsfläche hauptsächlich die Dichtung an der Berührungsstelle zwischen Oberkante der Heckscheibe und Schiebedach herstellt. Daneben übernimmt diese seitliche Dichtungsfläche aber auch die Abdichtung gegenüber dem Schottblech. Durch ein derartig aufgebautes Dichtungsprofil ist es möglich, die Dichtungsleiste in einem einzigen Arbeitsgang herzustellen. Es sind für die einzelnen Dichtungszonen keine unterschiedlichen Profile vorzusehen.

Vorteilhaft ist es, die beiden Dichtungsflächen durch einen nasenartigen Fortsatz voneinander zu trennen. Dieser Fortsatz hat im Bereich der Heckscheibe die Aufgabe, sich bei geschlossener Hecktür über die Oberkante der Heckscheibe zu legen. Die Oberkante kann sich demnach beim Schließen der Hecktür unterhalb dieser Nase in die Dichtungsleiste eindrücken.

In einer weiteren vorteilhaften Ausführungsform weist die Dichtungsleiste ein Zweikammerhohlprofil auf. Diese Kammern sind unterteilt durch einen schräg nach oben zur Schiebedachkante verlaufenden Steg. Außerdem befindet sich der Steg im Bereich der seitlichen Dichtungsfläche. Durch diese Anordnung des Trennungsstegs ist die Dichtungsleiste im Heckscheibenbereich in der Lage, gegenüber der Scheibe einen genügenden Druck aufzubauen für ein spaltfreies Anlegen der Dichtungsleiste an die Scheibenoberfläche. Desweiteren verhindert der Trennungssteg ein Abheben der Dichtung von der Schiebedachoberfläche.

Um die Dichtungsleiste in einfacher Weise montieren zu können, weist das Schiebedach einen umlaufenden nach unten abstehenden Flansch auf, auf den die Dichtungsleiste mit einem Fußteil aufgesteckt ist. Durch diese Anordnung ist sichergestellt, daß die Dichtungsleiste nicht aus ihrem Sitz geschoben werden kann.

Die Abdichtung von derartigen Mehrzweckpersonenkraftwagen ist besonders problematisch in den Eckbereichen zwischen Schiebedach, Heckscheibe und Hecksäule. In einer zweckmäßigen Ausführung sieht die erfindungsgemäße Dichtungsleiste in diesen Bereichen Formstücke vor, die den Bereich vollständig abdichten. Sie sind an der Dichtungsleiste beispielsweise durch Vulkanisieren befestigt.

Das erfindungsgemäße Schiebedach läßt sich in besonders vorteilhafter Weise bei Mehrzweckpersonenwagen einsetzen, bei denen für die Anlenkung der Fahrzeugtür in den Hecksäulen jeweils eine Gelenknische vorgesehen ist. Die Gelenknischen haben zwei Funktionen. Einmal erlauben sie eine Gelenkkonstruktion, die die gewünschte Schwenkbewegung der Oberkante der Heckscheibe über das Schiebedach ermöglicht. Es wäre zwar denkbar, die gleiche Bewegungsbahn über ein an der Fahrzeugaußenseite vorgesehenes Scharnier zu erreichen. Eine solche Konstruktion verbietet sich aber aus stilistischen Gründen. Mit innenliegenden Gelenken andererseits ist eine solche Bewegungsbahn nur schwer darstellbar.

Die zweite Funktion der Gelenknische besteht darin, das von der Wasserführung eingeleitete Wasser zu sammeln und über weitere Wasserführungskanäle im Fugenbereich zwischen Fahrzeugkarosserie und Hecktür nach unten wegzuleiten.

Wird demnach die Hecktür vollständig nach oben geschwenkt, befindet sich die Oberkante der Heckscheibe in Nachbarschaft der Wasserführung, so daß das von der Heckscheibe abfließende Wasser auf das Schiebedach und in die Wasserführung läuft und von dort über die Gelenknischen weggeleitet wird. Der Gepäckraum bleibt frei von Wassereintritt.

Die erwähnte Schwenkbewegung läßt sich besonders gut durch Scharniere, die als Gelenkviereck ausgelegt sind bewerkstelligen. Zu diesem Zweck zeichnet sich wiederum die Gelenknische in den Hecksäulen aus, da sie für die Anordnung derartiger Scharniere genügend Bauraum bietet.

Die Schwenkbewegung läßt sich nun durch das Gelenkviereck so auswählen, daß beim Öffnen der Hecktür in der Anfangsphase die Heckscheibenoberkante zunächst eine in etwa horizontale oder gar nach unten gerichtete Bewegung weg von der Dichtleiste des Schiebedaches vollzieht. Dies ist besonders vorteilhaft bei einem Dichtleistenprofil, das sich beim Schließen der Hecktür um die Oberkante der Heckscheibe legt.

Der erfindungsgemäße Aufbau der Fahrzeugkarosserie im Endbereich, läßt auch ein einfaches Montieren des Schiebedaches und der Hecktür zu. Nach Anspruch 11 besteht das karosserieseitige Scharnierteil des Hecktürengelenks aus einem der Gelenknische nachgebildeten und an der Fahrzeugkarosserie befestigbaren Winkelblech.

An diesem Winkelblech ist seitlich und zum Fahrzeuginnenraum hin ein Schottblech befestigt. Beim Zusammenbau des Fahrzeugs wird zunächst die Hecktür mit den Scharnieren vollständig vormontiert. Daneben wird das Schiebedach von hinten in das Karosseriedach eingeschoben, wobei zu diesem Zeitpunkt die Hecktür an der Fahrzeugkarosserie noch nicht befestigt ist. Nach Einbau des Schiebedachs wird dann die Hecktür mit den karosserieseitigen Scharnierteilen an den Hecksäulen verschraubt. Dadurch wird auch der Innenraum nach außen hin durch das Schottblech abgedeckt. Wäre das Schottblech nicht mit dem Scharnier verbunden, sondern beispielsweise ein Bestandteil der hinteren Hecksäule, würde es Platzprobleme beim Einbau des Schiebedachs geben.

Die Gelenknischen sind zur Fahrzeugaußenseite hin zunächst offen. Durch entsprechende Ausgestaltung der Hecktür, insbesondere der oberen Enden der Arme kann die Nische verblendet werden. In einer vorteilhaften Ausführung jedoch sind die seitlichen Scheiben des Fahrzeugs soweit nach hinten gezogen, daß sie die Gelenknischen überdecken. Dabei ist dieser Teil der Scheibe dunkel eingefärbt.

Weitere vorteilhafte Ausgestaltungen der Erfindung ergeben sich aus der nachfolgenden Beschreibung eines Ausführungsbeispiels und der dazugehörigen Zeichnung. Es zeigen

Fig. 1 den Heckabschnitt eines Mehrzweckpersonenkraftwagens mit geöffneter Heckklappe und Blick auf eine Gelenknische;
Fig. 2 bis 5 in schematischer Darstellung ein als Gelenkviereck ausgebildetes Scharnier für die Hecktür in den einzelnen Stadien des Öffnungsvorganges;
Fig. 6 der Mehrzweckpersonenkraftwagen in ähnlicher Darstellung wie Fig. 1, jedoch mit geschlossener Heckklappe und einem Teilausschnitt aus dem Schiebedach und der Karosserie;
Fig. 7 eine Einzelheit Y nach Fig. 6 in vergrößertem Maßstab und
Fig. 8 eine Einzelheit Z nach Fig. 6 ebenfalls in vergrößertem Maßstab.

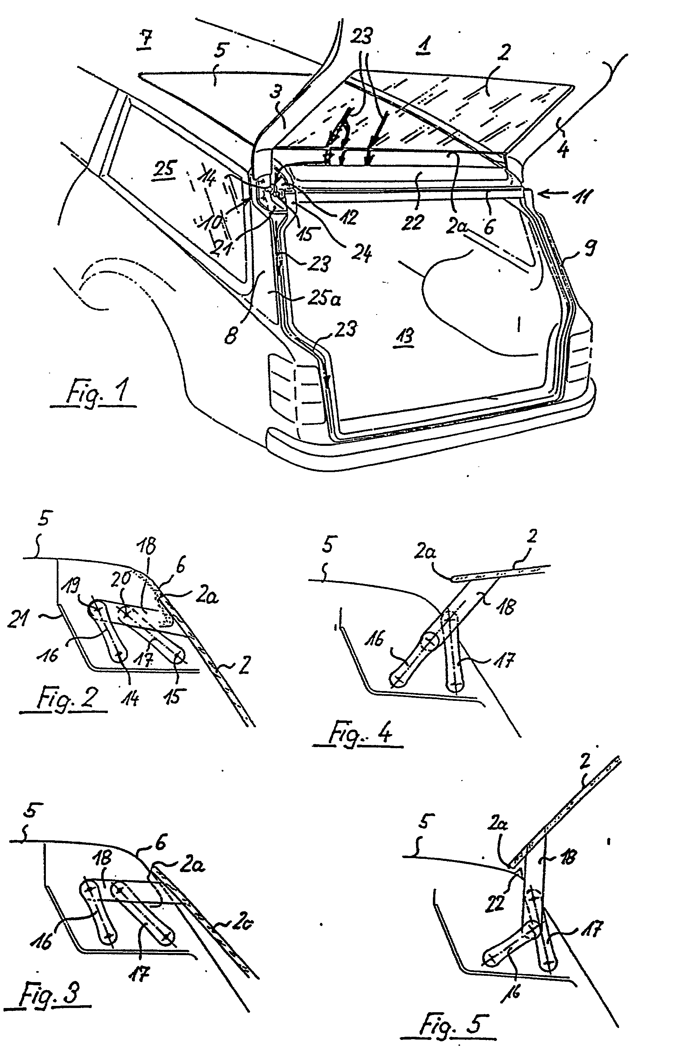

Der in Fig. 1 gezeigte Mehrzweckpersonenkraftwage,der im allgemeinen Sprachgebrauch als Kombi bezeichnet wird, weist eine Hecktür 1 auf mit einer versenkbaren Heckscheibe 2, die in Fig. 1 geschlossen ist. An der Fahrzeugtür 1 sind beidseitig Arme 3, 4 vorgesehen, mit deren freien Enden die Hecktür 1 am oberen hinteren Endbereich der Fahrzeugkarosserie angelenkt ist. Die Arme 3, 4 dienen zugleich als Führungsrahmen für die Heckscheibe 2.

Desweiteren sieht der Kombi ein Schiebedach 5 vor, das in Fahrtrichtung nach vorne geöffnet werden kann. In Fig. 1 ist das Schiebedach 5 ebenfalls vollständig geschlossen. Wie Fig. 2 zeigt, liegt in diesem Zustand bei gechlossener Hecktür 1 die Oberkante 2a der Heckscheibe 2 am hinteren Rand des Schiebedachs 5 an. Eine Querverbindung der Karosserie zwischen den beiden oberen Endbereichen ist bei dem Fahrzeug nicht vorgesehen.

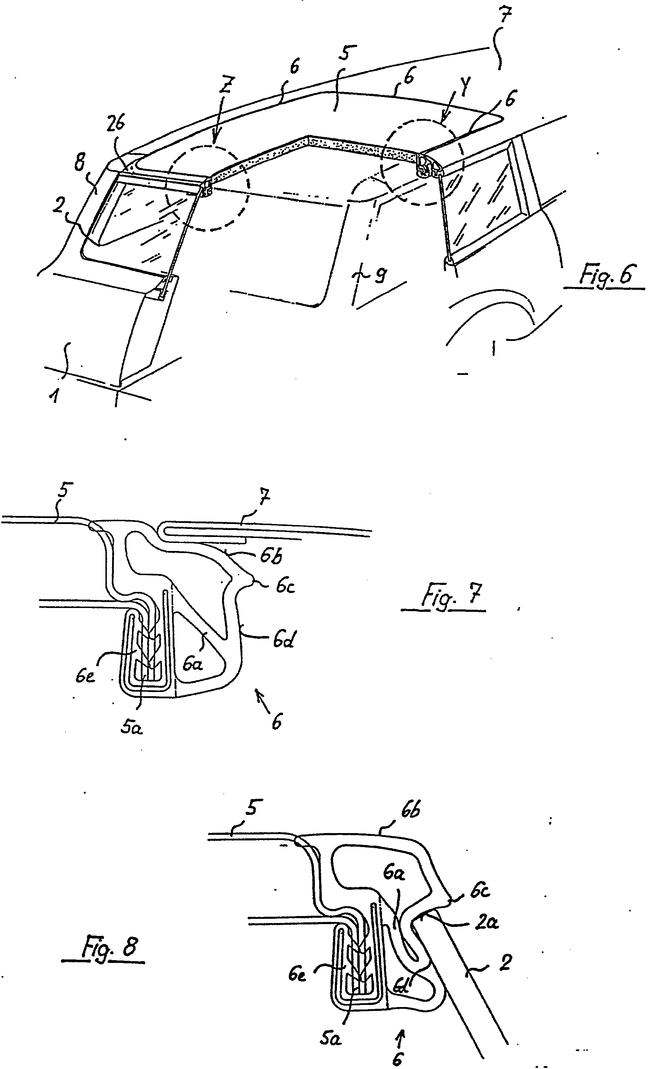

Das Schiebedach 5 nimmt eine umlaufende Dichtungsleiste 6 auf (siehe Fig. 6). Die Dichtungsleiste 6 übernimmt die Abdichtung zwischen Schiebedach 5 und Fahrzeugkarosserie bzw. Fahrzeugdach 7 einerseits und zwischen Schiebedach 5 und Heckscheibe 2 andererseits. Auf die Form der Dichtungsleiste wird weiter unten noch näher eingegangen.

Zurückkommend auf Fig. 1, sieht jee Hecksäule 8, 9 der Fahrzeugkarosserie im Säulenfirst eine Gelenknische 10, 11 vor. Aus Darstellungsgründen ist lediglich die Gelenknische 10 deutlich erkennbar und es wird daher im weiteren Verlauf der Beschreibung nur von dieser Gelenknische ausgegangen. Für die Gelenknische 11 gilt Entsprechendes. Die Gelenknische 10 ist über ein Schottblech 12 gegenüber dem Innenraum des Fahrzeugs, der allgemein mit 13 bezeichnet ist, verschlossen. Desweiteren nimmt sie das Scharnier für die Anlenkung der Hecktüre 1 auf. Das Scharnier selbst ist nicht vollständig dargestellt, es sind lediglich Lagerzapfen 14, 15 zu sehen, die Gelenkhebel 16, 17 (Fig. 2) karosserieseitig lagern. Die Lagerzapfen 14, 15 sind im gezeigten Ausführungsbeispiel an der Schottwand befestigt, sie könnten aber ebensogut auch an einem davon getrennten Lagerbock vorgesehen sein.

In Zusammenschau von Fig. 1 und 2 bauen sich Scharniere, mit denen die Hecktür 1 und die Karosserie angelenkt ist folgendermaßen auf: An seinem freien Ende trägt der Arm 3, ein türseitiges Scharnierteil 18, das ebenfalls Lagerzapfen 19, 20 für die Gelenkhebel 16, 17 aufweist. Das karosserieseitige Scharnierteil besteht aus einem Winkelblech 21, mit der Innenform der Gelenknische 10. An dem Winkelblech 21 ist die bereits erwähnte Schottwand 12 befestigt. Zwischen den Lagerzapfen 14, 15 und 19, 20 sind drehbar die ebenfalls bereits erwähnten Gelenkhebel 16, 17 angeordnet. Durch diese Anordnung entsteht ein Gelenkviereck. Dabei ist der Gelenkhebel 16 etwas kürzer aufgelegt als der Gelenkhebel 17, während dieser im geschlossenen Zustand der Fahrzeugtür 1 schräger angestellt ist als der Gelenkhebel 16. Insgesamt liegen beide Gelenkhebel 16, 17 in Fahrtlängsrichtung gesehen hintereinander.

Durch die Anordnung der Gelenkhebel 16, 17 und ihre Abmessungen vermag die Oberkante 2a der Heckscheibe 2 beim Öffnen der Hecktür 1 die in den Figuren 3 bis 5 dargestellten Bewegungsbahn auszuführen. Zunächst hebt sie nach Fig. 3 von der nur stilisiert dargestellten Dichtungsleiste 6 des Schiebedachs in etwa in waagrechter Richtung ab. Sodann vollführt sie nach Fig. 4 eine Bewegung über das Schiebedach hinweg. Schließlich nach Fig. 5 nimmt sie bei vollständig geöffneter Fahrzeugtür eine Lage über dem Schiebedach ein und befindet sich dabei - in Fahrtrichtung gesehen - vor der querverlaufenden höckerartigen Erhebung 22, die den hinteren Rand des Schiebedachs abschließt.

Die höckerartige Erhebung 22 ist in Fig. 1 besser erkennbar. Hier wird auch die Funktion dieses Bauteils ersichtlich. Sie dient als Wasserführung für das Regenwasser, das sich auf der Hecktür 1 bzw. der Heckscheibe 2 befindet und das bei Öffnen der Hecktür 1 über die Oberkante 2a abläuft. Der Verlauf des Regenwassers ist in Fig. 1 durch die Pfeile 23 dargestellt. Danach läuft es über die Heckscheibe und wird in dem als Wasserführung dienenden Fußab schnitt der höckerartigen Erhebung 22 gesammelt und weitergeleitet zu der Gelenknische 10. Von dort fließt es über die Trennfuge zwischen Karosserie und Hecktür 1 nach unten. Zusätzlich schützt eine Dichtung 24 den Innenraum, die sich über die Gelenknische nach oben bis zum oberen Rand der Schottwand 12 erstreckt.

Schließlich ist in Fig. 1 noch eine Seitenscheibe 25 erkennbar, deren hinterer Abschnitt 25a über die Fensteröffnung hinaus bis zur Hecksäule 8 verlängert ist und dadruch die Gelenknische nach außen abschließt. In der Zeichnung ist dies durch eine strichpunktierte Linie angedeutet.

In den Figuren 6, 7 und 8 ist nun die Funktion der Dichtungsleiste 6 des Schiebedachs 5 bei geschlossenem Fahrzeug erkennbar. Die Schnittdarstellung nach Fig. 6 zeigt zwei unterschiedliche Dichtungsaufgaben der Dichtungsleiste 6. Einmal muß sie nach Fig. 7 das Schiebedach 5 gegenüber das Fahrzeugdach 7 abdichten und zum anderen nach Fig. 8 das Schiebedach 5 gegenüber der Heckscheibe 2. Die Dichtungsleiste 6 besteht aus einem Zweikammerhohlprofil, bei dem die beiden Kammern durch einen schräg nach oben in Richtung Schiebedach 5 verlaufenden Trennungssteg 6a voneinander getrennt sind. An ihrer äußeren Oberfläche bildet die Dichtungsleiste 6 zwei Dichtungsflächen aus; eine erste Dichtungsfläche 6b, die nach Fig. 7 mit der Dachkante 7 zusammenwirkt. Daran schließt sich über einen nasenartigen Fortsatz 6c eine weitere seitliche Dichtungsfläche 6d an, die mit der Heckscheibe 2 zusammenarbeitet.

Der Trennungssteg 6a liegt im Bereich dieser zweiten seitlichen Dichtungsfläche 6d. Aus Fig. 8 ist ersichtlich, daß er die Festigkeit der Dichtung insgesamt erhöht und insbesondere bei anliegender Heckscheibe 2 die nötige Gegenkraft aufbringt, um ein dichtendes Anlegen der Dichtungsleiste 6 zu erreichen. In dieser Figur ist ebenfalls erkennbar, daß bei geschlossner Fahrzeugtür die Oberkante 2a der Heckscheibe dichtend von unten an den nasenartigen Fortsatz 6c stößt.

Für die Befestigung der Dichtungsleiste 6 am Schiebedach 5 weist deises einen umlaufenden nach unten abstehenden Flansch 5a auf, auf den die Dichtungsleiste 6 mit einem Fußteil 6e geschoben ist. Außerdem sieht die Dichtungsleiste 6 an dem Eckbereich zwischen Hecksäule 8, Schiebedach 5 und Heckscheibe 2 ein Formstück 26 vor, das diesen kritischen Bereich abdichtet.

**Patentansprüche**

1. Schiebedach (5) für Mehrzweckpersonenkraftwagen, insbesondere Kombi mit einer Hecktür (1), die eine versenkbare Heckscheibe (2) aufnimmt und mit zwei als Führungsrahmen für die Heckscheibe (2) dienenden Armen (3, 4) an den oberen hinte-ren Endbereichen der Fahrzeugkarosserie ange-lenkt ist, wobei das Schiebedach (5) in seinem geschlossenen Zustand gegen die geschlossene Heckscheibe (2) anliegt, dadurch gekennzeichnet, daß das Schiebedach (5) eine umlaufende Dichtungsleiste (6) aufweist mit einer ersten, oberen Dichtungsfläche (6b) für die Dichtungszone zwischen dem Dach (7) der Fahrzeugkarosserie und Schiebedach (5) und einer zweiten seitlichen Dichtungsfläche (6d) für die Dichtungszone zwischen Oberkante (2a) der Heckscheibe (2) und dem Schiebedach (5) und daß der hintere Schiebedachab-schnitt eine querverlaufende Wasserführung auf-weist.

2. Schiebedach nach Anspruch 1, dadurch gekennzeichnet, daß die beiden Dichtungflächen (6) durch einen nasenartigen Fortsatz (6c) voneinander getrennt sind.

3. Schiebedach nach Anspruch 1 oder 2, dadurch gekennzeichnet, daß die Dichtungsleiste (6) als Zweikammerhohlprofil ausgelegt ist mit einem in Höhe der seitlichen Dichtungsfläche (6d) schräg nach oben in Richtung Rand des Schiebedaches (5) verlaufenden Trennungssteg (6a).

4. Schiebedach nach einem der Ansprüche 1 bis 3, dadurch gekennzeichnet, daß es einen nach unten abstehenden umlaufenden Flansch (5a) aufweist, auf den die Dichtungsleiste (6) mit einem Fußteil (6e) aufgesteckt ist.

5. Schiebedach nach einem der Ansprüche 1 bis 4, dadurch gekennzeichnet, daß die Dichtungsleiste (6) an ihren der Heckscheibe (2) zugewandten Eckabschnitten Formstücke (26) aufweist.

6. Schiebedach nach einem der Ansprüche 1 bis 5, dadurch gekennzeichnet, daß die Wasserführung durch eine höckerartige Erhebung (22) der Schiebedachoberfläche und/oder der Dichtungsleiste (6) gebildet ist.

7. Schiebedach nach Anspruch 6, dadurch gekennzeichnet, daß die höckerartige Erhebung (22) ein Spoiler ist.

8. Verwendung eines Schiebedachs (5) nach einem der Ansprüche 1 bis 7 für einen Mehrzweckpersonenkraftwagen, bei dem für die Anlenkung der Hecktür (1) in jeder Hecksäule (8, 9) der Fahrzeugkarosserie eine zum Fahrzeuginnenraum (13) hin verschlossene Gelenknische (10, 11) vorgesehen ist, wobei die Wasserführung des hinteren Schiebedachabschnittes in die Gelenknische mündet und sich die Oberkante (2a) der geschlossenen Heckscheibe (2) bei vollständig geöffneter Hecktür (1) sich über dem hinteren Schiebedachabschnitt im Bereich der Wasserführung befindet.

9. Personenkraftwagen nach Anspruch 8, dadurch gekennzeichnet, daß die Gelenke der Hecktür (1) aus einem türseitigen Scharnierteil und einem karosserieseitigen Scharnierteil bestehen, wobei beide Scharnierteile über zwei, in Fahrzeuglängsrichtung gesehen hintereinander liegende, ein Gelenkviereck bildende Gelenkhebel (16, 17) miteinander verbunden sind.

10. Personenkraftwagen nach Anspruch 9, dadurch gekennzeichnet, daß die Gelenkhebel (16, 17) in ihrer Länge und Anordnung so aufeinander abgestimmt sind, daß die geschlossene Heckscheibe (2) beim Öffnen der Fahrzeugtür (1) mit ihrer Oberkante (2a) zunächst eine im wesentlichen waagrechte Bewegung weg von der Dichtungsleiste (6) des Schiebedaches (5), und sodann eine Schwenkbewegung über den hinteren Rand des Schiebedaches (5) vollzieht.

11. Personenkraftwagen nach Anspruch 9 oder 10, dadurch gekennzeichnet, daß das karosserieseitige Scharnierteil aus einem der Gelenknische nachgebildeten und an der Fahrzeugkarosserie befestigbaren Winkelblech (21) besteht mit einer seitlichen, dem Fahrzeuginnenraum zugewandten und diesen nach außen hin verschließenden Schottwand (12).

12. Personenkraftwagen nach einem der Ansprüche 9 bis 11, dadurch gekennzeichnet, daß die Gelenknischen (10, 11) durch verlängerte Seitenscheiben (25) nach außen hin verblendet sind.

## Claims

1. A sliding roof (5) for multi-purpose passenger cars, especially an estate car with a rear door (1) which accommodates a lowerable rear screen (2) and is articulated with two arms (3, 4) serving as a guide frame for the rear screen (2) on the upper rear end regions of the vehicle body, while the sliding roof (5) in its closed condition lies against the closed rear screen (2), characterised in that the sliding roof (5) has a surrounding sealing strip (6) having a first, upper sealing face (6b) for the sealing zone between the roof (7) of the vehicle body and the sliding roof (5) and a second lateral sealing face (6d) for the sealing zone between the upper edge (2a) of the rear screen (2) and the sliding roof (5), and in that the rear sliding roof section possesses a transversely-extending water guide. ·

2. A sliding roof according to Claim 1, characterised in that the two sealing faces (6b, d) of the sealing strip (6) are separated from one another by a nose-like projection (6c).

3. A sliding roof according to Claim 1 or 2, characterised in that the sealing strip (6) is designed as a two-chamber hollow section with a separating web (6a) extending, at the level of the lateral sealing face (6d), obliquely upwards in the direction of the edge of the sliding roof (5).

4. A sliding roof according to any one of Claims 1 to 3, characterised in that it comprises a downwardly protruding, surrounding flange (5a) on to which the sealing strip (6) is pushed with a foot part (6e).

5. A sliding roof according to any one of Claims 1 to 4, characterised in that the sealing strip (6) comprises shaped pieces (26) on its corner sections facing the rear screen (2).

6. A sliding roof according to any one of Claims 1 to 5, characterised in that the water guide is formed by a hump-like elevated portion (22) of the sliding roof upper surface and/or of the sealing strip (6).

7. A sliding roof according to Claim 6, characterised in that the hump-like elevation (22) is a spoiler.

8. The use of a sliding roof (5) according to any one of Claims 1 to 7 for a multi-purpose passenger car, in which for the articulation of the rear door (1) in each rear column (8, 9) of the vehicle body there is provided a hinge recess (10, 11) closed from the vehicle interior (13), while the water guide of the rear sliding roof section opens into the hinge recess and the upper edge (2a) of the closed rear screen (2) is situated, when the rear door (1) is completely opened, above the rear sliding roof section in the region of the water guide.

9. A passenger car according to Claim 8, characterised in that the hinges of the rear door (1) comprise a hinge part on the door and a hinge part on the body, the two hinge parts being connected with one another through two joint levers (16, 17) lying one behind the other, seen in the longitudinal direction of the vehicle, and forming a quadrilateral linkage.

10. A passenger car according to Claim 9, characterised in that the joint levers (16, 17) are so adapted to one another in length and arrangement that the closed rear screen (2) in the opening of the vehicle door (1) completes with its upper edge (2a) firstly a substantially horizontal movement away from the sealing strip (6) of the sliding roof (5) and then a pivoting movement to over the rear edge of the sliding roof (6).

11. A passenger car according to Claim 9 or 10, characterised in that the hinge part on the body comprises an angle plate (21) made to simulate the hinge recess and securable on the vehicle body, with a lateral wall (12) facing the interior of the vehicle and closing this interior from the exterior.

12. A passenger car according to one of Claims 9 to 11, characterised in that the hinge recesses (10, 11) are concealed to the exterior by prolonged side plates (25).

## Revendications

1. Toit ouvrant (5) pour voiture particulière à fonctions multiples, notamment un break avec un hayon (1), qui reçoit une lunette arrière (2) susceptible d'être abaissée, et qui est articulé sur les parties terminales arrières supérieures de la carrosserie du véhicule par deux bras (3, 4) jouant le rôle de cadre de guidage pour la lunette arrière (2), le toit ouvrant (5) s'appliquant, lorsqu'il est fermé, contre la lunette arrière (2) également fermée, toit ouvrant caractérisé en ce que ce toit ouvrant (5) comporte une bordure d'étanchéité (6) périphérique avec une première surface d'étanchéité supérieure (6b) pour la zone d'étanchement entre le toit (7) de la carrosserie du véhicule et le toit ouvrant (5), et une seconde surface d'étanchéité latérale (6d) pour la zone d'étanchement entre le bord supérieur (2a) de la lunette arrière (2) et le toit ouvrant (5), tandis que la partie arrière du toit ouvrant comporte une canalisation d'eau transversale.

2. Toit ouvrant selon la revendication 1, caractérisé en ce que les deux surfaces d'étanchéité (6b, 6d) de la bordure d'étanchéité (6) sont séparées l'une de l'autre par un prolongement (6c) en forme de bec.

3. Toit ouvrant selon la revendication 1 ou la revendication 2, caractérisé en ce que la bordure d'étanchéité (6) est réalisée sous la forme d'un profilé creux à deux chambres avec une traverse de séparation (6a) s'étendant au niveau de la surface d'étanchéité latérale (6d) obliquement vers le haut en direction du bord du toit ouvrant (5).

4. Toit ouvrant selon une des revendications 1 à 3, caractérisé en ce qu'il comporte un flasque périphérique (5a) faisant saillie vers le bas et sur lequel la bordure d'étanchéité (6) est emboîtée par une partie de pied (6e).

5. Toit ouvrant selon une des revendications 1 à 4, caractérisé en ce que la bordure d'étanchéité (6) comporte une pièce de forme (26) sur ses parties de coin tournées vers la lunette arrière (2).

6. Toit ouvrant selon une des revendications 1 à 5, caractérisé en ce que la canalisation d'eau est constituée par une saillie en forme de bosse (22) de la surface du toit ouvrant et/ou de la bordure d'étanchéité (6).

7. Toit ouvrant selon la revendication 6, caractérisé en ce que cette saillie en forme de bosse (22) est un déflecteur dynamique.

8. Utilisation d'un toit ouvrant (5) selon une des revendications 1 à 7, pour une voiture particulière à fonctions multiples, dans lequel il est prévu pour l'articulation du hayon (1) sur chacun des pieds droits (8, 9) de la carrosserie du véhicule, une niche d'articulation (10, 11) fermée vers l'espace interne (13) du véhicule, la canalisation d'eau de la partie arrière du toit ouvrant débouchant dans cette niche d'articulation, et le bord supérieur (2a) de la lunette arrière (2) lorsqu'elle est fermée et lorsque le hayon (1) est complètement ouvert, se trouvant au-dessus de la partie arrière du toit ouvrant au voisinage de la canalisation d'eau.

9. Voiture particulière selon la revendication 8, caractérisée en ce que les articulations du hayon (1) sont constituées par une partie de charnière côté hayon et une partie charnière côté carrosserie, ces deux parties de charnière étant reliées ensemble par l'intermédiaire de deux leviers d'articulation (16, 17) constituant un quadrilatère d'articulations et placés l'un derrière l'autre lorsqu'ils sont vus dans la direction de marche.

10. Voiture particulière selon la revendication 9, caractérisée en ce que les leviers d'articulation (16, 17) sont accordés entre eux en longueur et en disposition de façon que la lunette arrière fermée (2), lors de l'ouverture du hayon (1) accomplisse avec son bord supérieur (2a) tout d'abord un mouvement essentiellement horizontal l'écartant de la bordure d'étanchéité (6) du toit ouvrant (5) et ensuite un mouvement de pivotement au-dessus du bord supérieur du toit ouvrant (5).

11. Voiture particulière selon la revendication 9 ou la revendication 10, caractérisée en ce que la partie de charnière côté carrosserie est constituée par une tôle coudée (21) reproduisant la forme de la niche d'articulation et susceptible d'être fixée à la carrosserie du véhicule, avec une paroi étanche latérale (12) tournée vers l'espace interne du véhicule et fermant celui-ci vers l'extérieur.

12. Voiture particulière selon une des revendications 9 à 11, caractérisée en ce que les niches d'articulation (10, 11) sont aveuglées vers l'extérieur par des prolongements des glaces latérales (25).

_Fig. 1_

_Fig. 2_

_Fig. 4_

_Fig. 3_

_Fig. 5_

Fig. 6

Fig. 7

Fig. 8